# EUROPEAN PATENT APPLICATION

(11) **EP 4 152 662 A1**
(43) Date of publication of application: **22.03.2023**
(21) Application number: 22204992.6
(22) Date of filing: 14.07.2020
(51) Int. Cl.: H04L 1/08, H04W 72/04

(54) **CONTROLLING PACKET DATA CONVERGENCE PROTOCOL (PDCP) DUPLICATION WITH DIFFERENT MEDIUM ACCESS CONTROL (MAC) CONTROL ELEMENTS (CES)**

(30) Priority: 30.07.2019 US 201962880150 P
(62) Divisional of application: 20744181.7
(71) Applicant: Telefonaktiebolaget LM ERICSSON (PUBL), 16483 Stockholm (SE)
(72) Inventor: Pradas, Jose Luis, SE-118 27 STOCKHOLM (SE); Dudda, Torsten, DE-41849 WASSENBERG (DE)
(74) Representative: Valea AB

(57) **Abstract**

Embodiments include methods performed by a user equipment (UE). Such methods include receiving, from a network node in a radio access network (RAN), a first control message identifying which of a plurality of configured radio link control (RLC) entities are to be activated for PDCP duplication. The plurality of configured RLC entities are associated with a radio bearer between the UE and the RAN. Such methods include subsequently receiving, from the network node, a second control message indicating activation or deactivation of PDCP duplication for the configured RLC entities. The second control message has a different format than the first control message. Such methods include activating or deactivating PDCP duplication for the configured RLC entities based on the first control message and the second control message. Other embodiments include complementary methods perform by network nodes, as well as UEs and network nodes configured to perform such methods.

## Description

### TECHNICAL FIELD

The present application relates generally to the field of wireless communication networks, and more specifically to arrangements where user equipment (UE, e.g., wireless devices) can communicate with wireless networks via multiple instances of a single protocol layer (e.g., RLC layer).

### BACKGROUND

Currently the fifth generation ("5G") of cellular systems, also referred to as New Radio (NR), is being standardized within the Third-Generation Partnership Project (3GPP). NR is developed for maximum flexibility to support multiple and substantially different use cases. These include enhanced mobile broadband (eMBB), machine type communications (MTC), ultra-reliable low latency communications (URLLC), side-link device-to-device (D2D), and several other use cases. The present disclosure relates generally to NR, but the following description of Long-Term Evolution (LTE) technology is provided for context since it shares many features with NR

LTE is an umbrella term for so-called fourth-generation (4G) radio access technologies developed within the Third-Generation Partnership Project (3GPP) and initially standardized in Releases 8 and 9, also known as Evolved UTRAN (E-UTRAN). LTE is targeted at various licensed frequency bands and is accompanied by improvements to non-radio aspects commonly referred to as System Architecture Evolution (SAE), which includes Evolved Packet Core (EPC) network. LTE continues to evolve through subsequent releases that are developed according to standards-setting processes with 3GPP and its working groups (WGs), including the Radio Access Network (RAN) WG, and sub-working groups (*e.g.*, RANI, RAN2, *etc.*)*.*

LTE Rel-10 supports bandwidths larger than 20 MHz. One important requirement on Rel-10 is backward compatibility with LTE Rel-8. This also includes spectrum compatibility in which a wideband LTE Rel-10 carrier (*e.g.*, wider than 20 MHz) should appear as multiple carriers to an LTE Rel-8 ("legacy") terminal ("user equipment" or UE). Each such carrier can be referred to as a Component Carrier (CC). For efficient usage, legacy terminals can be scheduled in all parts of the wideband LTE Rel-10 carrier. This can be done by Carrier Aggregation (CA), in which a Rel-10 terminal receives multiple CCs, each having the same structure as a Rel-8 carrier.

In the context of LTE, a primary serving cell is the "main" cell serving the UE, carrying both data and control signaling between the UE and the network. In addition, one or more supplementary or secondary serving cells (SCells) are typically used for carrying data only. For example, SCell(s) can provide extra bandwidth to enable greater data throughput. The PCell is based on the primary CC (PCC) and SCells are based on the secondary CC (SCC). A CA-capable UE is assigned a PCell that is always activated, and one or more SCells that can be activated or deactivated dynamically as needed.

The number of aggregated CCs as well as the bandwidth of individual CCs can be different for uplink (UL, i.e., UE to network) and downlink (DL, i.e., network to UE). A "symmetric configuration" refers to an identical number of CCs being configured in DL and UL, whereas an "asymmetric configuration" refers to different numbers of configured DL and UL CCs. Furthermore, the number of CCs configured in a cell may be different from the number of CCs seen by a terminal. For example, a terminal can support more downlink CCs than uplink CCs, even though the cell is configured with the same number of uplink and downlink CCs.

A dual connectivity (DC) framework was defined in LTE Rel-12. DC refers to a mode of operation in which a UE can be connected to two network nodes simultaneously, thereby improving connection robustness and/or capacity. In the LTE, the two network nodes are referred to as "Master eNB" (MeNB) and "Secondary eNB" (SeNB), or more generally master node (MN) and secondary node (SN). DC can be viewed as a special case of CA, in which the aggregated carriers (or cells) are provided by network nodes that are physically separated from one another and are not required to be connected to each other through a high-speed, low-latency backhaul connection.

More generally, a UE in DC is configured with a Master Cell Group (MCG) and a Secondary Cell Group (SCG). A Cell Group (CG) is a group of serving cells associated with either the MeNB or the SeNB. A Master Cell Group (MCG) is a group of serving cells associated with the MeNB, comprising a primary cell (PCell) and optionally one or more secondary cells (SCells). A Secondary Cell Group (SCG) is a group of serving cells associated with the SeNB comprising a Primary SCell (PSCell) and optionally one or more SCells. The term "Special Cell" (or "SpCell" for short) refers to the PCell or the PSCell depending on whether the UE's medium access control (MAC) entity is associated with the MCG or the SCG, respectively. In single-connectively operation (*e.g.*, CA), SpCell refers to the PCell. An SpCell is always activated and supports physical uplink control channel (PUCCH) transmission and contention-based random access (CBRA) by UEs.

Put another way, a UE in DC maintains simultaneous connections to anchor and booster nodes, where the anchor node is also referred to as the MeNB and the booster nodes are also referred to as SeNBs. As its name implies, the MeNB terminates the control plane connection towards the UE and, as such, is the controlling node of the UE, including handovers to and from SeNBs. For example, the MeNB is the eNB that terminates at least the S1-MME connection, *i.e.,* the connection between the eNB and the Mobility Management Entity (MME) for the UE. An SeNB is an eNB that is providing additional radio resources (*e.g.*, bearers) for the UE but that is not the MeNB. Types of radio resource bearers include MCG bearers, SCG bearers, and split bearers.

The RRC layer controls communications between a UE and an eNB at the radio interface, as well as the mobility of a UE between cells in the E-UTRAN. After a UE is powered ON it will be in the RRC_IDLE state until an RRC connection is established with the network, at which time the UE will transition to RRC_CONNECTED state (*e.g.*, where data transfer can occur). The UE returns to RRC_IDLE after the connection with the network is released. In RRC_IDLE state, the UE's radio is active on a discontinuous reception (DRX) schedule configured by upper layers. During DRX active periods (also referred to as "DRX On durations"), an RRC_IDLE UE receives system information (SI) broadcast by a serving cell, performs measurements of neighbor cells to support cell reselection, and monitors a paging channel on PDCCH for pages from the EPC via eNB. A UE in RRC_IDLE state is known in the EPC and has an assigned IP address, but is not known to the serving eNB (*e.g.*, there is no stored context). To utilize DC, a UE must be in RRC_CONNECTED state.

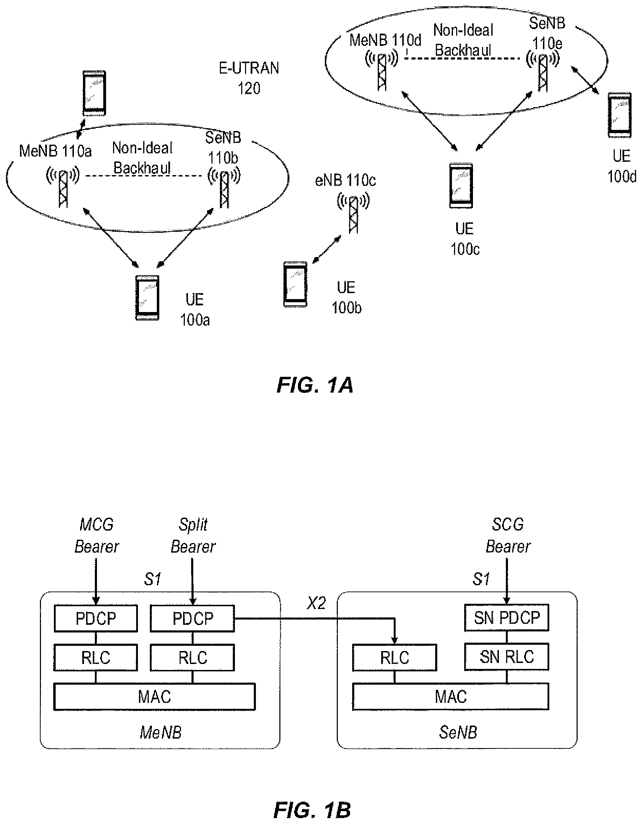

Figure 1A illustrates various exemplary LTE DC scenarios involving UEs 100 (*e.g.*, 100a-d) and base stations (eNBs) 110 (*e.g.*, 110a-e) of an E-UTRAN 120. As shown, only one SeNB (at most) is connected to any of the illustrated UEs. However, more than one SeNB can serve a UE in general. Moreover, only one cell each from both MeNB and SeNB are shown to be serving the UE, however more than one cell from both MeNB and SeNB can serve the UE in practice. From Figure 1A, it should also be clear that DC is a UE-specific feature and that a given network node (or a serving cell) can support a different UEs in DC and single connectivity at the same time. In other words, MeNB and SeNB are roles played, or functions provided, by eNBs 110 with respect to a particular UE. Thus, while the eNBs 110 in Figure 1A are labeled "MeNB" and "SeNB," this indicates only that they are playing this role for at least one UE 100. Indeed, a given eNB 110 may be MeNB for one UE while being SeNB for another UE.

The MeNB (or MN) provides system information, terminates the control plane, and can terminate the user plane. An SeNB (or SN), on the other hand, terminates only the user plane. The aggregated user plane (UP) protocol stack for LTE DC is illustrated in Figure 1B. The MeNB hosts packet data convergence protocol (PDCP) and radio link control (RLC) layers for MCG-only (or MCG) bearers, while the SeNB hosts PDCP and RLC layers for SCG-only (or SCG) bearers. The MeNB hosts the PDCP layer for split bearers, which interfaces with RLC layers in MeNB and SeNB. Each of MeNB and SeNB have a single MAC layer for all bearer types. This UP aggregation achieves benefits such as increasing the per user throughput for users that have good channel conditions and the capability of receiving and transmitting at higher data rates than can be supported by a single node, even without a low-latency backhaul/network connection between the MeNB and SeNB.

Similar to LTE, DC (also referred to as "multi-connectivity") is expected to be an important feature for the 5G architectures standardized by 3GPP. For example, 3GPP TR 38.804 (v14.0.0) describes various exemplary DC scenarios or configurations where the MN and SN can apply either NR, LTE, or both.

Although 5G multi-connectivity can provide various advantages, it also introduces various problems, difficulties, and/or issues. For example, packet duplication (also referred to as "PDCP duplication" or "PDCP PDU duplication") can increase reliability and reduce latency, which can be very beneficial for ultra-reliable low latency (URLLC) data services. When PDCP duplication is configured for a radio bearer by RRC, an additional RLC entity and an additional logical channel are added to the radio bearer to handle the duplicated PDCP protocol data units (PDUs). As such, PDCP duplication involves sending the same PDCP PDUs twice: once on the original RLC entity and a second time on the additional RLC entity. Although certain techniques exist for managing and/or controlling PDCP duplication, they are inadequate to handle various improvements and/or extensions envisioned for 5G multi-connectivity.

### SUMMARY

Accordingly, exemplary embodiments of the present disclosure address these and other difficulties in managing and/or controlling PDCP duplication in multiple RLC entities used to communicate between a UE and a network node, thereby enabling the otherwise-advantageous deployment of advanced radio networks, such as E-UTRANs and/or NG-RANs.

Some exemplary embodiments include methods (e.g., procedures) for a user equipment (UE, *e.g.*, wireless device, IoT device, modem, *etc.* or component thereof). These exemplary methods can include receiving, from a network node in a radio access network (RAN), a first control message identifying which of a plurality of configured radio link control (RLC) entities are to be activated for PDCP duplication. The plurality of configured RLC entities can be associated with a radio bearer between the UE and the RAN.

These exemplary methods can also include receiving, from the network node, a second control message indicating activation or deactivation of PDCP duplication for the configured RLC entities. The second control message has a different format than the first control message. These exemplary methods can also include activating or deactivating PDCP duplication for the configured RLC entities based on the first control message and the second control message.

In some embodiments, the second control message does not explicitly identify particular configured RLC entities. In some embodiments, the first and second control messages can be respective medium access control (MAC) control elements (CEs), with the first control message having a 3GPP Rel-16 format and the second control message having a 3GPP Rel-15 format.

In some embodiments, these exemplary methods can also include, when the number of configured RLC entities identified to be activated by the first control message is greater than a predetermined threshold, activating PDCP duplication for the identified RLC entities before receiving the second control message. In some embodiments, the predetermined threshold is one.

In some embodiments, these exemplary methods can also include, when the number of configured RLC entities identified to be activated by the first control message is less than the predetermined threshold, performing the following operations before receiving the second control message: clearing stored activation status of the configured RLC entities; and deactivating PDCP duplication for all configured RLC entities.

In some embodiments, these exemplary methods can also include, when the number of configured RLC entities to be activated by the first control message is equal to the predetermined threshold, performing one or more operations before receiving the second control message. In some embodiments, the one or more operations can include activating PDCP duplication only for default activated RLC entities. In other embodiments, the one or more operations can include storing activation status of the configured RLC entities, and subsequently deactivating PDCP duplication for all configured RLC entities.

In various embodiments, the activating or deactivating operations can include, when the second control message indicates activation of the configured RLC entities, reading a stored activation status of the configured RLC entities and, when the stored activation status indicates at least one configured RLC entity activated, activating or deactivating PDCP duplication for the configured RLC entities according to the stored activation status.

In some embodiments, the activating or deactivating operations can also include, when the second control message indicates activation of the configured RLC entities and the stored activation status indicates all configured RLC entities deactivated, checking for stored default activated RLC entities. Furthermore, when the stored default activated RLC entities exist, the UE can activate PDCP duplication only for the stored default activated RLC entities, and when the stored default activated RLC entities do not exist, the UE can activate PDCP duplication for all configured RLC entities.

In some embodiments, the activating or deactivating operations can also include, when the second control message indicates deactivation of the configured RLC entities, deactivating PDCP duplication for all configured RLC entities. In addition, the UE can either clear the activation status of all configured RLC entities, or the UE can store an activation status of all configured RLC entities prior to the deactivating operation.

In some embodiments, these exemplary methods can also include receiving, from the RAN, a configuration associated with PDCP duplication, and storing the received configuration. The configuration can include the configured RLC entities and an indication of which of the configured RLC entities are default activated RLC entities. The configuration can be received via one or more RRC messages, for example. In some embodiments, the configuration can also include a further indication of whether, upon reception of a second control message indicating activation of PDCP duplication, the UE should activate PDCP duplication for the default activated RLC entities, or for configured RLC entities that were activated before a most recent deactivation of PDCP duplication. In such embodiments, the activating or deactivating operations can be further based on this received further indication.

Other embodiments include methods (e.g., procedures) for a network node (*e.g.*, base station, gNB, en-gNB, eNB, ng-eNB, *etc.*) of a radio access network (RAN, e.g., E-UTRAN, NG-RAN). These exemplary methods can include transmitting, to the UE, a first control message identifying which of a plurality of configured radio link control (RLC) entities are to be activated for PDCP duplication. The plurality of configured RLC entities can be associated with a radio bearer between the UE and the RAN. These exemplary methods can also include subsequently determining that the activation status of one or more of the configured RLC entities needs to be changed. These exemplary methods can also include subsequently transmitting, to the UE, a second control message indicating activation or deactivation of the configured RLC entities. The second control message can have a different format than the first control message.

In some embodiments, the second control message does not explicitly identify particular configured RLC entities. In some embodiments, the first and second control messages can be respective medium access control (MAC) control elements (CEs), with the first control message having a 3GPP Rel-16 format and the second control message having a 3GPP Rel-15 format.

In some embodiments, these exemplary methods can also include transmitting, to the UE, a configuration associated with PDCP duplication. The configuration can include the configured RLC entities and an indication of which of the configuration RLC entities are default activated RLC entities. The configuration can be transmitted via one or more RRC messages, for example. In some embodiments, the configuration can also include a further indication of whether, upon reception of a second control message indicating activation of PDCP duplication, the UE should activate PDCP duplication for the default activated RLC entities, or for configured RLC entities that were activated before a most recent deactivation of PDCP duplication.

In some embodiments, the determining operations can include determining that PDCP duplication should be activated for one of the following: configured RLC entities that were activated before the most recent deactivation of all configured RLC entities, default activated RLC entities, or all configured RLC entities. In such embodiments, the second control message can indicate activation of the configured RLC entities (e.g., without explicitly identifying particular configured RLC entities). In some of these embodiments, the second control message can implicitly indicate the following priority rule associated with the indicated activation:
- configured RLC entities that were activated before the most recent deactivation of all configured RLC entities;
- default activated RLC entities, when no configured RLC entities were activated before the most recent deactivation and default activated RLC entities are configured for the UE; and
- all configured RLC entities, when default activated RLC entities are not configured for the UE.

In some embodiments, the determining operations can include determining that PDCP duplication for the configured RLC entities should be deactivated. In such embodiments, the second control message can indicate deactivation of the configured RLC entities (e.g., without explicitly identifying particular configured RLC entities). In some of these embodiments, the second control message can implicitly indicate that the UE should perform one of the following operations: clear the activation status of all configured RLC entities, or store an activation status of all configured RLC entities prior to the deactivating operation.

Other embodiments include UEs (*e.g.*, wireless devices, IoT devices, modems, *etc.* or components thereof) and network nodes (*e.g.*, base stations, gNBs, en-gNBs, eNBs, ng-eNBs, *etc.* or components thereof) configured to perform operations corresponding to any of the exemplary methods described herein. Other embodiments include non-transitory, computer-readable media storing computer-executable instructions that, when executed by processing circuitry of such UEs or network nodes, configure the same to perform the operations corresponding to any of the exemplary methods described herein.

These and other objects, features, and advantages of the present disclosure will become apparent upon reading the following Detailed Description in view of the Drawings briefly described below.

### BRIEF DESCRIPTION OF THE DRAWINGS

Figure 1A is a high-level network diagram illustrating various exemplary Long-Term Evolution (LTE) dual connectivity (DC) scenarios involving user equipment (UEs) and evolved NodeBs (eNBs).
Figure 1B illustrates an exemplary user plane (UP) protocol stack for LTE DC, such as shown in Figure 1A.
Figure 2 illustrates a high-level view of the 5G network architecture, including a Next Generation radio access network (NG-RAN) and a 5G core (5GC) network.
Figure 3 illustrates interfaces within an NG-RAN node (*e.g.*, gNB) that support control plane (CP) and user plane (UP) functionality.
Figures 4 and 5 show exemplary control plane (CP) and user plane (UP) connectivity, respectively, for E-UTRAN/NR dual connectivity (EN-DC).
Figure 6 illustrates exemplary MR-DC connectivity involving an ng-eNB MN, a gNB SN, and a 5GC.
Figures 7-8 show exemplary MR-DC CP and UP protocol architectures, respectively.
Figure 9, which includes Figures 9A-C, illustrates various aspect of an exemplary MAC CE command for activating and/or deactivating PDCP duplication, according to various exemplary embodiments of the present disclosure.
Figures 10-11 illustrate two exemplary UE operational flows upon receipt of a Rel-15 or a Rel-16 MAC CE that activates or deactivates PDCP duplication, according to various exemplary embodiments of the present disclosure.
Figure 12, which includes Figures 12-B, shows an exemplary method (e.g., procedure) for a user equipment (UE, e.g., wireless device), according to various exemplary embodiments of the present disclosure.
Figure 13 shows an exemplary method (e.g., procedure) for a network node in a radio access network (RAN, e.g., E-UTRAN, NG-RAN), according to various exemplary embodiments of the present disclosure.
Figure 14 is a block diagram of a user equipment (UE, e.g., wireless device), according to various exemplary embodiments of the present disclosure.
Figure 15 is a block diagram of an exemplary network node (e.g., base station, eNB, gNB, etc.), according to various exemplary embodiments of the present disclosure.
Figure 16 is a block diagram of an exemplary network configured to provide over-the-top (OTT) data services between a host computer and a UE, according to various exemplary embodiments of the present disclosure.

### DETAILED DESCRIPTION

Exemplary embodiments briefly summarized above will now be described more fully with reference to the accompanying drawings. These descriptions are provided by way of example to explain the subject matter to those skilled in the art and should not be construed as limiting the scope of the subject matter to only the embodiments described herein. More specifically, examples are provided below that illustrate the operation of various embodiments according to the advantages discussed above.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods and/or procedures disclosed herein do not have to be performed in the exact order disclosed, unless a step is explicitly described as following or preceding another step and/or where it is implicit that a step must follow or precede another step. Any feature of any of the embodiments disclosed herein can be applied to any other embodiment, wherever appropriate. Likewise, any advantage of any of the embodiments can apply to any other embodiments, and vice versa. Other objects, features, and advantages of the disclosed embodiments will be apparent from the following description.

Furthermore, the following terms are used throughout the description given below:
- Radio Access Node: As used herein, a "radio access node" (or equivalently "radio network node," "radio access network node," or "RAN node") can be any node in a radio access network (RAN) of a cellular communications network that operates to wirelessly transmit and/or receive signals. Some examples of a radio access node include, but are not limited to, a base station (*e.g.*, a New Radio (NR) base station (gNB) in a 3GPP Fifth Generation (5G) NR network or an enhanced or evolved Node B (eNB) in a 3GPP LTE network), base station distributed components (*e.g.*, CU and DU), a high-power or macro base station, a low-power base station (*e.g.*, micro, pico, femto, or home base station, or the like), an integrated access backhaul (IAB) node (or component thereof such as MT or DU), a transmission point, a remote radio unit (RRU or RRH), and a relay node.
- Core Network Node: As used herein, a "core network node" is any type of node in a core network. Some examples of a core network node include, *e.g.*, a Mobility Management Entity (MME), a serving gateway (SGW), a Packet Data Network Gateway (P-GW), an access and mobility management function (AMF), a session management function (AMF), a user plane function (UPF), a Service Capability Exposure Function (SCEF), or the like.
- Wireless Device: As used herein, a "wireless device" (or "WD" for short) is any type of device that has access to (*i.e.*, is served by) a cellular communications network by communicate wirelessly with network nodes and/or other wireless devices. Communicating wirelessly can involve transmitting and/or receiving wireless signals using electromagnetic waves, radio waves, infrared waves, and/or other types of signals suitable for conveying information through air. Unless otherwise noted, the term "wireless device" is used interchangeably herein with "user equipment" (or "UE" for short). Some examples of a wireless device include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, mobile terminals (MTs), *etc.*
- Radio Node: As used herein, a "radio node" can be either a "radio access node" (or equivalent term) or a "wireless device."
- Network Node: As used herein, a "network node" is any node that is either part of the radio access network (*e.g.*, a radio access node or equivalent term) or of the core network (*e.g.*, a core network node discussed above) of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (*e.g.*, administration) in the cellular communications network.
- Node: As used herein, the term "node" (without any prefix) can be any type of node that is capable of operating in or with a wireless network (including a RAN and/or a core network), including a radio access node (or equivalent term), core network node, or wireless device.

Note that the description given herein focuses on a 3GPP cellular communications system and, as such, 3GPP terminology or terminology similar to 3GPP terminology is generally used. However, the concepts disclosed herein are not limited to a 3GPP system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from the concepts, principles, and/or embodiments described herein.

In addition, functions and/or operations described herein as being performed by a wireless device or a network node may be distributed over a plurality of wireless devices and/or network nodes. Furthermore, although the term "cell" is used herein, it should be understood that (particularly with respect to 5G NR) beams may be used instead of cells and, as such, concepts described herein apply equally to both cells and beams.

As briefly mentioned above, although 5G multi-connectivity can provide various advantages, it also introduces various problems, difficulties, and/or issues. For example, although certain techniques exist for managing and/or controlling PDCP duplication, they are inadequate to handle various improvements and/or extensions envisioned for 5G multi-connectivity. This is discussed in more detail after the following description of 5G network architecture and multi-connectivity scenarios.

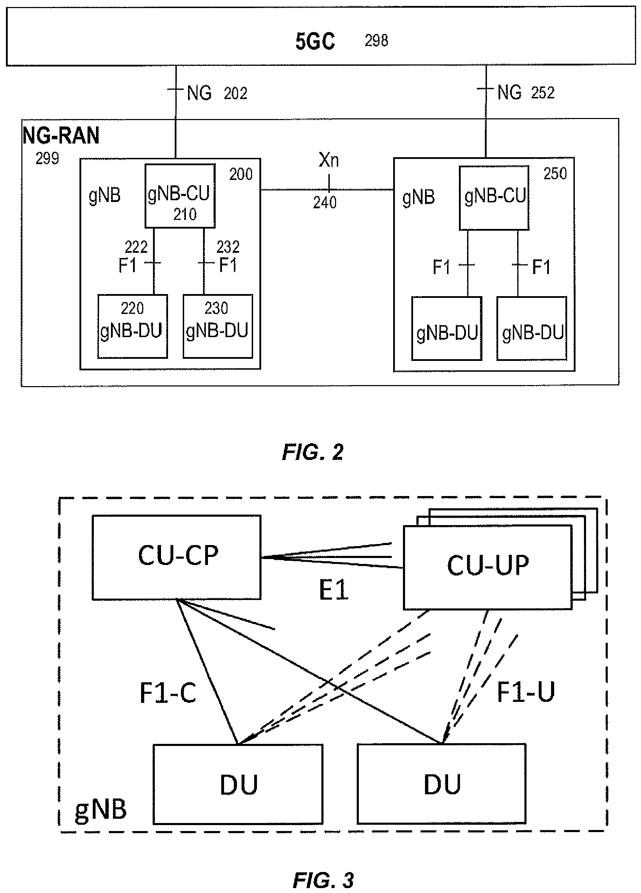

Figure 2 illustrates a high-level view of the 5G network architecture, consisting of a Next Generation RAN (NG-RAN) 299 and a 5G Core (5GC) 298. NG-RAN 299 can include one or more gNodeB's (gNBs) connected to the 5GC via one or more NG interfaces, such as gNBs 200, 250 connected via interfaces 202, 252, respectively. More specifically, gNBs 200, 250 can be connected to one or more Access and Mobility Management Functions (AMFs) in the 5GC 298 via respective NG-C interfaces. Similarly, gNBs 200, 250 can be connected to one or more User Plane Functions (UPFs) in 5GC 298 via respective NG-U interfaces. Various other network functions (NFs) can be included in the 5GC 298, including Session Management Function(s) (SMF).

Although not shown, in some deployments 5GC 298 can be replaced by an Evolved Packet Core (EPC), which conventionally has been used together with a Long-Term Evolution (LTE) Evolved UMTS RAN (E-UTRAN). In such deployments, gNBs 200, 250 can connect to one or more Mobility Management Entities (MMEs) in EPC 298 via respective S1-C interfaces. Similarly, gNBs 200, 250 can connect to one or more Serving Gateways (SGWs) in EPC via respective NG-U interfaces.

In addition, the gNBs can be connected to each other via one or more Xn interfaces, such as Xn interface 240 between gNBs 200 and 250. The radio technology for the NG-RAN is often referred to as "New Radio" (NR). With respect the NR interface to UEs, each of the gNBs can support frequency division duplexing (FDD), time division duplexing (TDD), or a combination thereof.

NG-RAN 299 is layered into a Radio Network Layer (RNL) and a Transport Network Layer (TNL). The NG-RAN architecture, *i.e.*, the NG-RAN logical nodes and interfaces between them, is defined as part of the RNL. For each NG-RAN interface (NG, Xn, F1) the related TNL protocol and the functionality are specified. The TNL provides services for user plane transport and signaling transport. In some exemplary configurations, each gNB is connected to all 5GC nodes within an "AMF Region" which is defined in 3GPP TS 23.501 (v15.5.0). If security protection for CP and UP data on TNL of NG-RAN interfaces is supported, NDS/IP (3GPP TS 33.401 (v15.8.0)) shall be applied.

The NG RAN logical nodes shown in Figure 2 (and described in 3GPP TS 38.401 (v15.6.0) and 3GPP TR 38.801 (v14.0.0)) include a Central Unit (CU or gNB-CU) and one or more Distributed Units (DU or gNB-DU). For example, gNB 200 includes gNB-CU 210 and gNB-DUs 220 and 230. CUs (*e.g.*, gNB-CU 210) are logical nodes that host higher-layer protocols and perform various gNB functions such controlling the operation of DUs. A DU (*e.g.*, gNB-DUs 220, 230) is a decentralized logical node that hosts lower layer protocols and can include, depending on the functional split option, various subsets of the gNB functions. As such, each of the CUs and DUs can include various circuitry needed to perform their respective functions, including processing circuitry, transceiver circuitry (*e.g.*, for communication), and power supply circuitry. Moreover, the terms "central unit" and "centralized unit" are used interchangeably herein, as are the terms "distributed unit" and "decentralized unit."

A gNB-CU connects to one or more gNB-DUs over respective F1 logical interfaces, such as interfaces 222 and 232 shown in Figure 2. However, a gNB-DU can be connected to only a single gNB-CU. The gNB-CU and connected gNB-DU(s) are only visible to other gNBs and the 5GC as a gNB. In other words, the F1 interface is not visible beyond gNB-CU.

Furthermore, the F1 interface between the gNB-CU and gNB-DU is specified and/or based on the following general principles:
- F1 is an open interface;
- F1 supports the exchange of signalling information between respective endpoints, as well as data transmission to the respective endpoints;
- from a logical standpoint, F1 is a point-to-point interface between the endpoints (even in the absence of a physical direct connection between the endpoints);
- F1 supports control plane and user plane separation into respective F1-AP protocol and F1-U protocol (also referred to as NR User Plane Protocol), such that a gNB-CU may also be separated in CP and UP;
- F1 separates Radio Network Layer (RNL) and Transport Network Layer (TNL);
- F1 enables exchange of user equipment (UE) associated information and non-UE associated information;
- F1 is defined to be future proof for new requirements, services, and functions; and
- A gNB terminates X2, Xn, NG and S1-U interfaces and, for the F1 interface between DU and CU, utilizes the F1-AP protocol that is defined in 3GPP TS 38.473 (v15.6.0).

In addition, the F1-U protocol is used to convey control information related to the user data flow management of data radio bearers, as defined in 3GPP TS 38.425 (v15.6.0). The F1-U protocol data is conveyed by the GTP-U protocol, more specifically by the "RAN Container" GTP-U extension header as defined in 3GPP TS 29.281 (v15.6.0). In other words, the GTP-U protocol over user datagram protocol (UDP) over Internet Protocol (IP) carries data streams on the F1 interface. A GTP-U "tunnel" between two nodes is identified in each node by tunnel endpoint identifier (TEID), an IP address, and a user datagram protocol (UDP) port number. A GTP-U tunnel is needed for forwarding packets between GTP-U entities.

Furthermore, a CU can host protocols such as RRC and PDCP, while a DU can host protocols such as RLC, MAC and PHY. Other variants of protocol distributions between CU and DU can exist, however, such as hosting the RRC, PDCP and part of the RLC protocol in the CU (e.g., Automatic Retransmission Request (ARQ) function), while hosting the remaining parts of the RLC protocol in the DU, together with MAC and PHY. In some exemplary embodiments, the CU can host RRC and PDCP, where PDCP is assumed to handle both UP traffic and CP traffic. Other arrangements of hosting certain protocols in the CU and certain others in the DU are also possible.

Additionally, centralized control plane protocols (*e.g.*, PDCP-C and RRC) can be hosted in a different CU than centralized user plane protocols (*e.g.*, PDCP-U). In particular, a gNB-CU can be separated into a CU-CP function (including RRC and PDCP for signaling radio bearers) and CU-UP function (including PDCP for user plane). Figure 3 shows an exemplary gNB architecture that includes two DUs, a CU-CP, and one or more CU-UPs. As shown in Figure 2, a single CU-CP can be associated with multiple CU-UPs in a gNB. The CU-CP and CU-UP communicate with each other using the E1-AP protocol over the E1 interface, as specified in 3GPP TS 38.463 (v15.4.0). Furthermore, the F1 interface between CU and DU (see Figure 1) is functionally split into F1-C between DU and CU-CP and F1-U between DU and CU-UP. Three deployment scenarios for the split gNB architecture shown in Figure 3 are defined in 3GPP TR 38.806 (v15.0.0):
- Scenario 1: CU-CP and CU-UP centralized;
- Scenario 2: CU-CP distributed and CU-UP centralized; and
- Scenario 3: CU-CP centralized and CU-UP distributed.

Similar to LTE, dual connectivity (DC, also referred to as "multi-connectivity") can be an important feature for the 5G RAN architectures standardized by 3GPP. For example, 3GPP TR 38.804 (v14.0.0) describes various exemplary DC scenarios or configurations where the MN and SN can apply either NR, LTE, or both. The following terminology is used to describe these exemplary DC scenarios or configurations:
- DC: LTE DC (*i.e.*, both MN and SN employ LTE, as discussed above);
- EN-DC: LTE-NR DC in which MN (eNB) employs LTE and SN (gNB) employs NR;
- NGEN-DC: LTE-NR DC in which a UE is connected to an enhanced eNB (i.e., ng-eNB) that acts as MN and a gNB that acts as SN. The ng-eNB is connected to the 5GC and the gNB is connected to the ng-eNB via the Xn interface.
- NE-DC: LTE-NR DC in which a UE is connected to a gNB that acts as MN and an ng-eNB that acts as SN. The gNB is connected to 5GC and the ng-eNB is connected to the gNB via the Xn interface.
- NR-DC (or NR-NR DC): both MN and SN employ NR.
- MR-DC (multi-RAT DC): a generalization of the Intra-E-UTRA Dual Connectivity (DC) described in 3GPP TS 36.300 (v15.6.0), where a multiple Rx/Tx UE may be configured to utilize resources provided by two different nodes connected via non-ideal backhaul, one providing E-UTRA access and the other one providing NR access. One node acts as MN and the other as SN. The MN and SN are connected via a network interface and at least the MN is connected to the core network. EN-DC, NE-DC, and NGEN-DC are specific examples of MR-DC.

MR-DC is envisioned as an important feature in 5G RAN architectures to deliver enhanced end-user bit rate by utilizing radio resources from both LTE and NR radio access technologies (RATs) concurrently towards a single UE. The EN-DC option mentioned above (also identified in 3GPP TR 38.801 (v14.0.0) as "option 3") is specified to support DC between a node providing E-UTRA resources (e.g., LTE eNB) and a node providing NR resources (e.g., gNB). In this arrangement, an LTE eNB acts as MN (CP anchor) and the NR gNB acts as SN (providing additional UP resources).

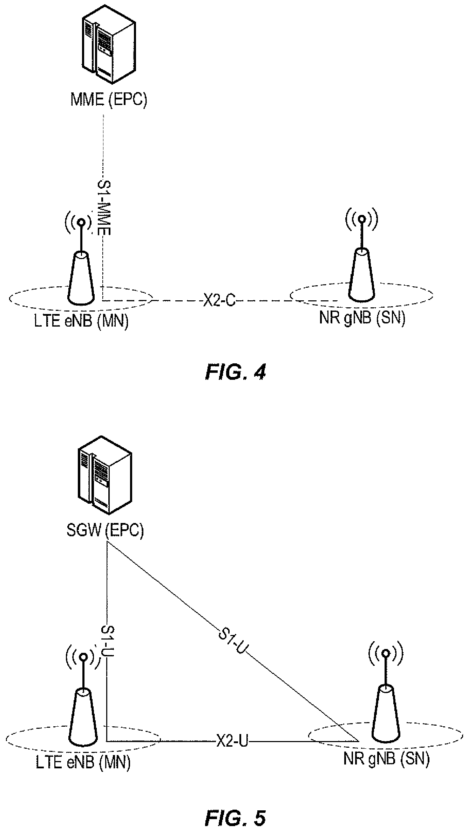

Figures 4-5 show exemplary control plane (CP) and user plane (UP) connectivity, respectively, between an LTE MN, an NR SN, and an EPC for EN-DC. As illustrated in Figures 4-5, EN-DC supports CP connectivity from RAN nodes towards the EPC (e.g., MME) via the S1 interface, and UP connectivity from the eNB/gNB towards the EPC via the S1-U interface. The interface between eNB and gNB can be an X2 interface.

When a 5GC serves the UE, an LTE ng-eNB and an NR gNB can be connected via an Xn interface in support of DC. The Xn interface can include Xn-U (UP) and Xn-C (CP) portions. LTE Rel-15 (also referred to as "eLTE") specified ng-eNBs that can connect to the 5GC via the NG interface, include NG-U (UP) and NG-C (CP) portions. Various DC options between the ng-eNB and gNB are also available in this architecture, such that the MN can be either the ng-eNB or the gNB.

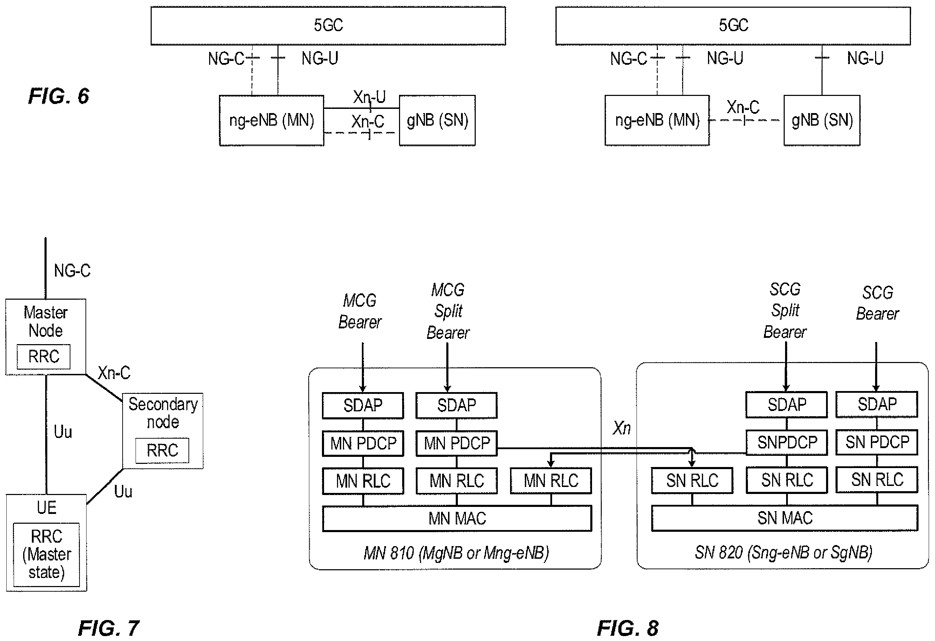

Figure 6 illustrates exemplary MR-DC connectivity with the 5GC and an ng-eNB MN, referred to as "option 7" in 3GPP TR 38.801. In this arrangement, SN UP traffic is sent to the 5GC either directly via SN NG-U (as shown on right) or indirectly via Xn-U to MN and then via MN NG-U (as shown on left).

In general, for MR-DC, the MN can anchor the control plane (CP) towards the CN, while the SN can provide control and user plane (UP) resources to the UE via coordination with the MN Various MR-DC protocol architectures are defined. Figure 7 shows an exemplary MR-DC CP protocol architecture in which the UE receives RRC messages from both MN and SN but only adopts an RRC state based on the MN Figure 8 shows an exemplary MR-DC UP protocol architecture in which various bearer types are available. The MN 810 (e.g., MgNB or Mng-eNB) can provide an MCG bearer and an MCG split bearer, whereby the MN can forward PDCP bearer traffic to the SN (e.g., SgNB or Sng-eNB) via Xn. As also shown in Figure 8, the SN 820 can provide a Secondary Cell Group (SCG) bearer and an SCG split bearer, whereby the SgNB can forward PDCP bearer traffic to the MgNB via Xn. In addition to PDCP, each of the bearer types can utilize various other protocols mentioned above. In some embodiments, the MN and/or SN can utilize the RAN split architecture (*e.g.*, CU and DU) discussed above.

Many NG-RAN nodes can provide both NR access via gNB functionality and E-UTRA/LTE access via evolved Node B (eNB) functionality. In such embodiments, many features for connectivity, mobility, support of QoS, *etc.* apply for both NR/5G and E-UTRA/LTE access, such that any feature described for gNBs can also apply to eNBs (e.g., ng-eNBs). For example, the higher/lower layer split described above for gNBs may also be used for ng-eNBs.

In the architecture shown in Figure 8, a UE maintains a PDCP entity for a split bearer that is connected to two RLC/MAC/PHY entities in the respective MN (or MCG) and SN (or SCG). In addition, a packet processing function (PPF) may be used to terminate the PDCP protocol on the network side. The PPF can be separate from, or collocated with, the MN or SN. For example, in the CU-DU split architecture shown in Figure 2, a CU can include the PPF that terminates PDCP, while the DU(s) can implement the protocol layers below PDCP. In DC, PDCP PDUs can be routed ("split") via either RLC entity or duplicated on both RLC entities. From PDCP point of view, the routes via RLC entity associated with MN (or MCG) or with SN (or SCG) may also be denoted as transmission paths. If the transmission paths to the two nodes are independent, PDCP duplication can increase reliability and reduce latency, which can be especially beneficial for 5G ultra-reliable low latency (URLLC) services.

A carrier aggregation (CA) protocol architecture is also specified for NR. While a UE is connected to multiple nodes in DC, a UE in CA is connected to only one radio node via multiple component carriers (CCs or "carriers", for short). In general CA scenarios, the UE maintains a separate physical layer (PHY) for each CC, but a single MAC/RLC/PDCP stack on top of the multiple PHYs. In this manner, MAC data units to be transmitted can be routed via both CCs.

An exception to the general CA scenarios is PDCP PDU duplication, in which the UE protocol stack includes two separate RLC logical channels, each associated with a separate PHY. In such arrangements, the PDCP layer routes duplicate PDUs onto separate RLCs, and the MAC layer distributes the duplicates to separate PHYs. In this scenario, from PDCP point of view, the routes via the different RLC entities associated with the same MAC entity (MCG or SCG) may be denoted as different (or independent) transmission paths.

To summarize, when packet duplication is configured for a radio bearer by radio resource control (RRC), an additional RLC entity and an additional logical channel are added to the radio bearer to handle the duplicated PDCP PDUs. The original PDCP PDU and the duplicate PDCP PDU are transmitted on different carriers (for CA) or to different nodes (for DC). The two different logical channels can either belong to the same MAC entity (in CA) or to different ones (in DC). For CA, logical channel mapping restrictions are used in MAC to ensure that the logical channel carrying the original PDCP PDUs and logical channel carrying the corresponding duplicates are not sent on the same carrier.

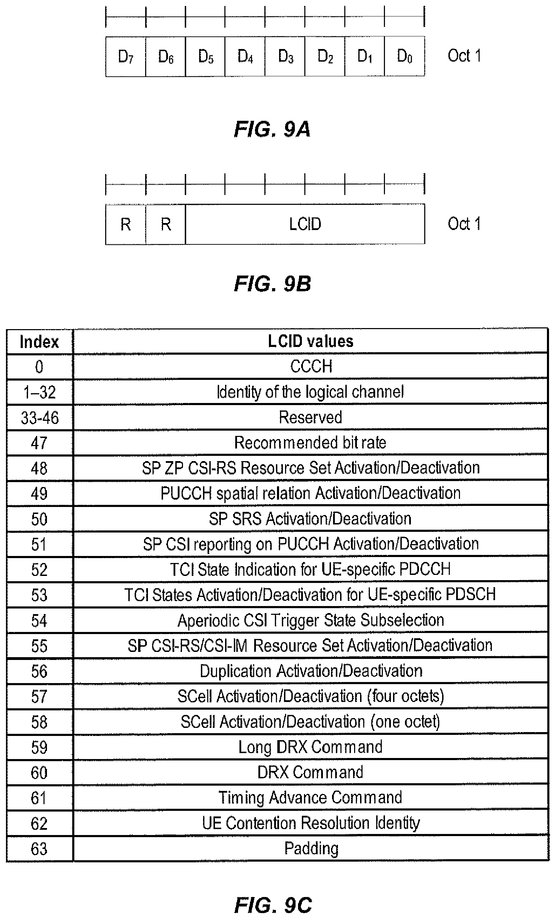

Once configured, duplication can be activated and de-activated per radio bearer by means of a MAC control element (CE). When PDCP Duplication is deactivated, the PDCP entity in the UE stops duplicating PDCP PDUs and will only transmit one copy of the PDCP PDU to one RLC entity in the case CA was configured, or to the primary RLC entity when DC was configured. Figure 9A shows an exemplary MAC CE command used for activating and/or deactivating PDCP duplication. Each bit *Dᵢ* (*i* = 0-7) in the octet indicates the PDCP Duplication status of a DRB identified by the (*i*+1)th DRB ID in the ascending order of DRB IDs configured with PDCP duplication and with RLC entity(ies) associated with the MAC entity transmitting the CE command. Each *Dᵢ* field is set to "1" to indicate that the PDCP duplication of DRB *i* shall be activated, and to "0" to indicate that the PDCP duplication of DRB *i* shall be deactivated.

Each MAC CE includes a MAC-subheader with a Logical Channel ID (LCID) value. Figure 9B shows an exemplary MAC subheader with a six-bit LCID and two reserved (R) bits. The LCID can take on different values corresponding to different MAC CE commands, such as illustrated in the exemplary table shown Figure 9C. In this table, which has been standardized for 3GPP Rel-15, the LCID value for PDCP duplication control is 56.

In 3GPP Rel-16, however, up to four (4) RLC entities can be configured for PDCP duplication by RRC. In addition, a new Rel-16 MAC CE for activating and/or deactivating duplication involving this larger number of RLC entities has also been introduced. For example, this new MAC CE can be used to specify which of the four RLC entities are used to transmit duplicates. However, this Rel-16 MAC CE is larger and more complex than the Rel-15 MAC CE described above with reference to Figure 9. As such, the Rel-16 MAC CE for PDCP duplication control requires more bandwidth to send to UEs, and requires more processing in UEs that receive it, both of which are undesirable.

Exemplary embodiments address these and other problems, issues, and/or difficulties by providing techniques to utilize the Rel-15 MAC CE for controlling Rel-16 PDCP duplication activation/deactivation features under certain scenarios. For example, the Rel-15 MAC CE can be utilized when the network does not require much flexibility and does not need to individually control the activated and deactivated RLC entities. The use of the smaller, less complex MAC CE in these scenarios requires less bandwidth to send to UEs, and can simplify UE processing.

As an illustrative example of such embodiments, consider a network that configures three (3) RLC entities and three (3) PDCP duplicates. The network may simply want to activate and deactivate the feature so that when it is activated all RLC entities are activated and each transmits one duplicate copy. This can be achieved with the existing Rel-15 MAC CE in the manner described below.

In one embodiment, the Rel-15 MAC CE can be used to activate duplication in all configured RLC entities. Alternately, the Rel-15 MAC CE can be used to activate duplication in RLC Entities identified (i.e., when configured by RRC) as *default* activated RLC entities. In this manner, when the Rel-15 MAC CE is received, duplication will be activated in only the default RLC entities.

In another embodiment, the Rel-15 MAC CE can be used to activate duplication in all of the RLC entities that were active prior to the last duplication deactivation. For example, a Rel-16 MAC CE was received that selectively deactivated some RLC entities, and subsequently PDCP duplication was fully deactivated. Then, when a Rel-15 MAC CE activating PDCP duplication is subsequently received, it re-activates duplication in only the RLC entities that were active before full deactivation. To facilitate this selective reactivation, the UE must store the identities of the RLC entities that were active prior to full deactivation.

In some embodiments, the network can configure the UE (e.g., via RRC) as to whether the UE should activate default RLC entities upon reception of a Rel-15 MAC CE activating PDCP duplication, or whether the UE should reactivate the stored RLC entities that were active before PDCP duplication was deactivated.

In a similar manner, a Rel-15 MAC CE can be used to deactivate PDCP duplication activated by a Rel-16 MAC CE. For example, PDCP duplication can be fully deactivated upon receipt of a Rel-15 MAC CE indicating deactivation. Alternately, the UE can store the RLC entities that were active upon full deactivation to support later reactivation of those, in the manner described above.

Although the Rel-16 MAC CE can specify which RLC entities should be used to transmit duplicates, PDCP duplication must be generally activated/deactivated. This can be done, for example, when the Rel-16 MAC CE is received and indicates two or more activated RLC entities. In other words, the Rel-16 MAC CE does not need to explicitly indicate PDCP duplication is activated, but the PDCP duplication status can be derived from the fact that at least two RLC entities are activated, which enabled PDCP duplication among those RLC entities as well.

In other embodiments, the Rel-16 MAC CE activation indication of one RLC entity can be interpreted as the activation of PDCP duplication. In this case, the UE can activate the default RLC entities (e.g., as indicated by RRC) or the RLC entities according to the last activation status stored by the UE, as described above. Similarly, PDCP duplication can be de-activated when the Rel-16 MAC CE is received and indicates zero activated RLC entities or one activated RLC entity, according to different embodiments.

In other embodiments, the values of zero and one activated RLC entities can be interpreted differently to increase flexibility. For example, if a Rel-16 MAC CE indicates one active RLC entity, the UE deactivates PDCP duplication and stores the last activation status of the RLC entities before the deactivation command was received. In this case, if the PDCP duplication is later re-activated by the Rel-15 MAC CE command, the UE will apply this previously stored activation status.

On the other hand, if a Rel-16 MAC CE indicates zero active RLC entities, the UE deactivates PDCP duplication and will reset the activation status to the default values upon receipt of a Rel-15 MAC CE reactivating PDCP duplication. In this manner, the choice between later reactivation of default RLC entities or stored RLC entities is dynamically controllable by the network via the Rel-16 MAC CE.

In another example, if a Rel-16 MAC CE indicates only one active RLC entity, the UE interprets this to mean that PDCP duplication is deactivated and that the primary RLC entity (from PDCP point of view) is changed to the indicated RLC entity. In yet another example, when PDCP duplication is deactivated by a Rel-16 MAC CE that indicates only one active RLC entity, PDCP duplication can be deactivated and, if the UE was configured with DC, the primary RLC entity can be changed to a RLC entity that was not the primary RLC entity before PDCP duplication was activated.

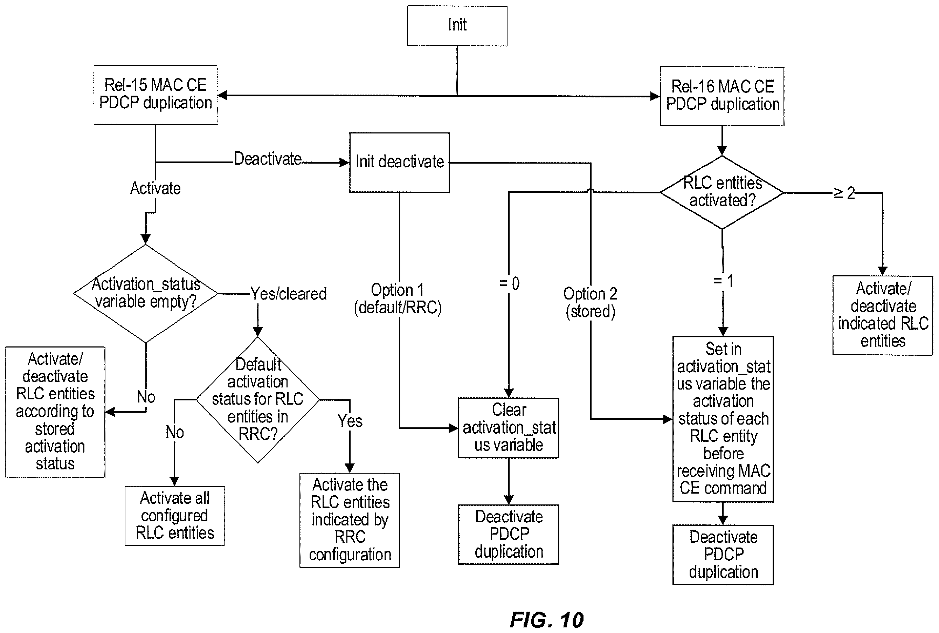

The embodiments described above are further illustrated by Figures 10-11, which illustrate two different UE operational flows upon receipt of a Rel-15 or a Rel-16 MAC CE that activates or deactivates PDCP duplication. In both figures, the *activation_status* variable (e.g., a list) represents the stored identities of the RLC entities that were active prior to full deactivation. In both figures, when the UE receives a Rel-15 MAC CE activating PDCP duplication, the UE checks if *activation_status* is empty and if not, it activates the RLC entities indicated by *activation_status.* If empty, the UE checks for a RRC-configured default activation list of configured RLC entities and, if available, activates the RLC entities given by that list. If no default list is available, the UE activates all configured RLC entities for PDCP duplication.

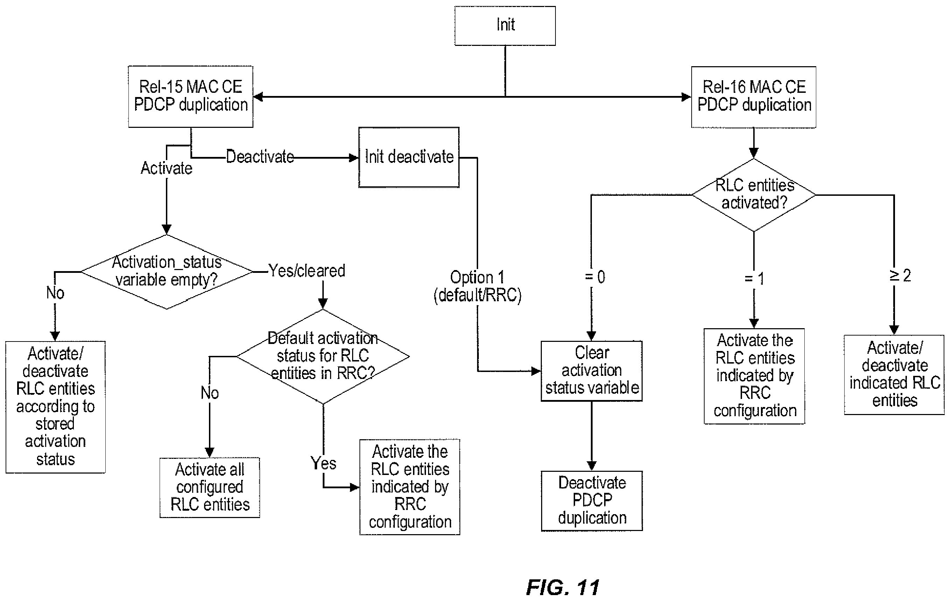

Figure 10 illustrates two different embodiments of the operations that occur when the UE receives a Rel-15 MAC CE deactivating PDCP duplication. In one embodiment, labelled "option 1", the UE clears the *activation_status* variable and fully deactivates PDCP duplication. In this embodiment, when the UE subsequently receives a Rel-15 MAC CE activating duplication, the cleared *activation_status* (e.g., indicating all deactivated) will cause the UE to activate the RRC-configured default activated RLC entities (if available), as discussed above. The UE also operates according to this embodiment in the signal flow diagram shown in Figure 11.

In the other embodiment shown in Figure 10, upon receiving a Rel-15 MAC CE deactivating PDCP duplication, the UE stores the identities of the RLC entities that are currently active in *activation_status* and fully deactivates PDCP duplication. In this embodiment, when the UE subsequently receives a Rel-15 MAC CE activating duplication, the non-cleared (non-empty) *activation_status* will cause the UE to activate RLC entities for duplication according to that stored variable (e.g., list).

Figures 10 and 11 also differ in how the UE responds to a Rel-16 MAC CE that indicates some number of RLC entities activated for PDCP duplication. In Figures 10 and 11, the UE interprets a Rel-16 MAC CE that indicates zero RLC entities activated as a full deactivation command, clears *activation_status,* and deactivates accordingly. In Figure 11, the UE interprets a Rel-16 MAC CE that indicates one RLC entity activated as a command to activate default RLC entities configured by RRC, and activates accordingly. On the other hand, in Figure 10, the UE interprets a Rel-16 MAC CE that indicates one RLC entity activated as a full deactivation command and a request to update *activation_status* to reflect currently activated RLC entities.

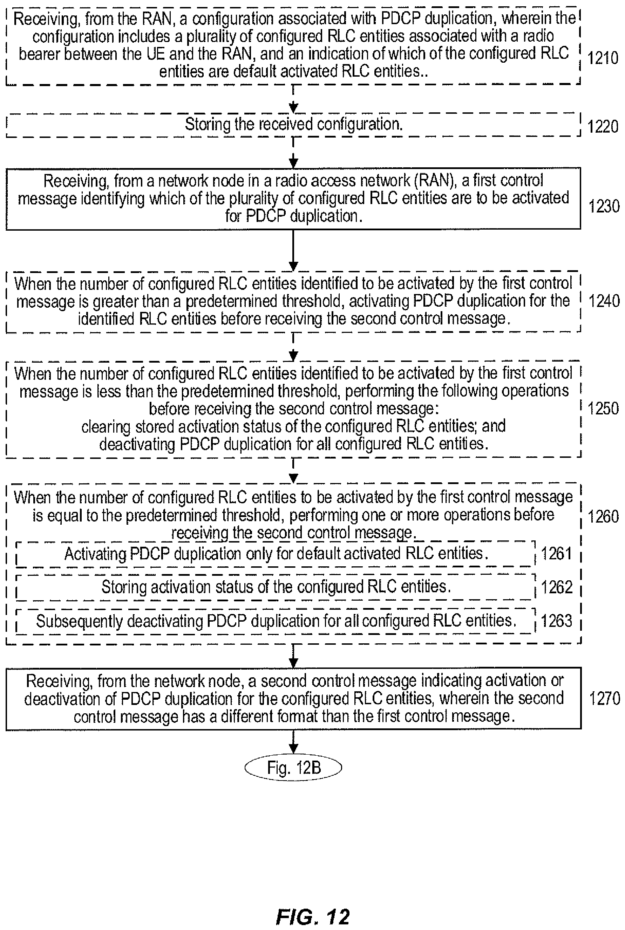

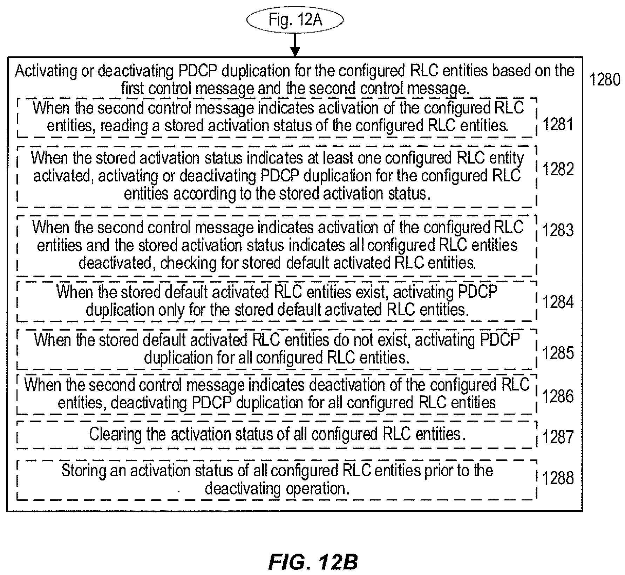

The embodiments described above can be further illustrated by the embodiments shown in Figures 12-13, which depict exemplary methods (e.g., procedures) performed by a UE and a network node, respectively. In other words, various features of the operations described below, with reference to Figures 12-13, correspond to various embodiments described above.

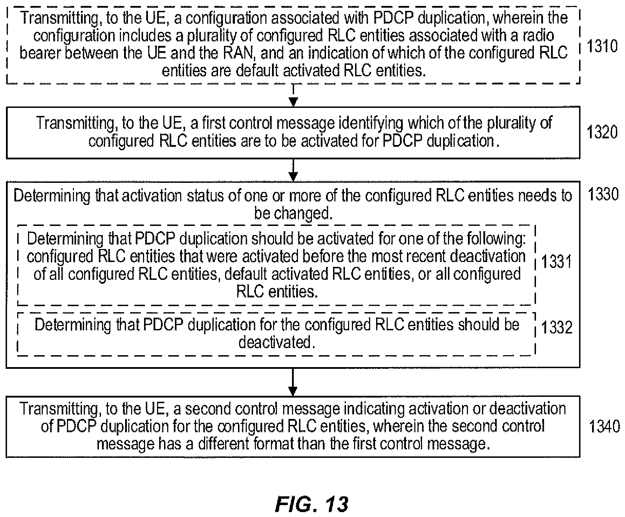

More specifically, Figure 12 (which includes Figures 12A-B) is a flow diagram illustrating an exemplary method (e.g., procedure) for a user equipment (UE), according to various exemplary embodiments of the present disclosure. The exemplary method shown in Figure 12 can be performed by a UE (*e.g*.*,* wireless device, IoT device, modem, *etc.* or component thereof) such as described in relation to other figures herein. Furthermore, the exemplary method shown in Figure 12 can be used cooperatively with other exemplary methods described herein (e.g., Figure 13) to provide various exemplary benefits and/or advantages, such as those described herein. Although Figure 12 shows specific blocks in a particular order, the operations of the exemplary method can be performed in a different order than shown and can be combined and/or divided into blocks having different functionality than shown. Optional blocks or operations are indicated by dashed lines.

The exemplary method illustrated in Figure 12 can include the operations of block 1230, in which the UE can receive, from a network node in a radio access network (RAN), a first control message identifying which of a plurality of configured radio link control (RLC) entities are to be activated for PDCP duplication. The plurality of configured RLC entities can be associated with a radio bearer between the UE and the RAN. The exemplary method can also include the operations of block 1270, in which the UE can subsequently receive, from the network node, a second control message indicating activation or deactivation of PDCP duplication for the configured RLC entities. The second control message has a different format than the first control message. The exemplary method can also include the operations of block 1280, in which the UE can activate or deactivate PDCP duplication for the configured RLC entities based on the first control message and the second control message.

In some embodiments, the second control message does not explicitly identify particular configured RLC entities. In some embodiments, the first and second control messages can be respective medium access control (MAC) control elements (CEs), with the first control message having a 3GPP Rel-16 format and the second control message having a 3GPP Rel-15 format. For example, the Rel-15 MAC CE shown in Figure 9 does not explicitly identify configured RLC entities.

In some embodiments, the exemplary method can also include the operations of block 1240, in which the UE can, when the number of configured RLC entities identified to be activated by the first control message is greater than a predetermined threshold, activate PDCP duplication for the identified RLC entities before receiving the second control message. In some embodiments, the predetermined threshold can be one.

In some embodiments, the exemplary method can also include the operations of block 1250, in which the UE can, when the number of configured RLC entities identified to be activated by the first control message is less than the predetermined threshold, perform the following operations before receiving the second control message: clearing stored activation status of the configured RLC entities; and deactivating PDCP duplication for all configured RLC entities.

In some embodiments, the exemplary method can also include the operations of block 1260, in which the UE can, when the number of configured RLC entities to be activated by the first control message is equal to the predetermined threshold, perform one or more operations before receiving the second control message. In some embodiments, the one or more operations can include sub-block 1261, where the UE can activate PDCP duplication only for default activated RLC entities. In other embodiments, the one or more operations can include the operations of sub-blocks 1262-1263. In sub-block 1262, the UE can store activation status of the configured RLC entities. In sub-block 1263, the UE can subsequently deactivate PDCP duplication for all configured RLC entities.

In various embodiments, the activating or deactivating operations in block 1280 can include the operations of sub-blocks 1281-1282. In sub-block 1281, the UE can, when the second control message indicates activation of the configured RLC entities, read a stored activation status of the configured RLC entities. In sub-block 1282, the UE can, when the stored activation status indicates at least one configured RLC entity activated, activate or deactivate PDCP duplication for the configured RLC entities according to the stored activation status.

In some embodiments, the operations of sub-block 1280 can also include the operations of sub-blocks 1283-1284. In sub-block 1283, the UE can, when the UE can, when the second control message indicates activation of the configured RLC entities and the stored activation status indicates all configured RLC entities deactivated, check for stored default activated RLC entities. In sub-block 1284, the UE can, when the stored default activated RLC entities exist, activate PDCP duplication only for the stored default activated RLC entities. In some embodiments, the operations of sub-block 1280 can also include the operations of sub-block 1285, where the UE can, when the stored default activated RLC entities do not exist, activate PDCP duplication for all configured RLC entities. As an example, the operations of sub-blocks 1281-1285 can correspond to operations in the "Activate" branch of the flow charts of Figures 10 and 11.

In some embodiments, the operations of block 1280 can also include the operations of sub-block 1286 and either sub-block 1287 or sub-block 1288. In sub-block 1286, the UE can, when the second control message indicates deactivation of the configured RLC entities, deactivate PDCP duplication for all configured RLC entities. In addition, the UE can clear the activation status of all configured RLC entities (sub-block 1287), or the UE can store an activation status of all configured RLC entities (sub-block 1288) prior to the deactivating operation (sub-block 1286). As an example, the operations of sub-blocks 1286-1288 can correspond to operations in the "Deactivate" branch of the flow charts of Figures 10 and 11.

In some embodiments, the exemplary method can also include the operations of blocks 1210-1220. In block 1210, the UE can receive, from the RAN, a configuration associated with PDCP duplication, wherein the configuration includes the configured RLC entities and an indication of which of the configured RLC entities are default activated RLC entities. The configuration can be received via one or more RRC messages, for example. In block 1220, the UE can store the received configuration. This stored configuration can be used in subsequent operations discussed above.

In some embodiments, the configuration can also include a further indication of whether, upon reception of a second control message indicating activation of PDCP duplication (e.g., such as in block 1270), the UE should activate PDCP duplication for the default activated RLC entities, or for configured RLC entities that were activated before a most recent deactivation of PDCP duplication. In such embodiments, the activating or deactivating operations (e.g., in block 1280) can be further based on this received further indication.

In addition, Figure 13 is a flow diagram illustrating an exemplary method (e.g., procedure) for a network node (*e.g.*, base station, gNB, en-gNB, eNB, ng-eNB, *etc.*) in a radio access network (RAN, *e.g.*, NG-RAN, E-UTRAN), according to various exemplary embodiments of the present disclosure. The exemplary method shown in Figure 13 can be performed by a network node such as described in relation to other figures herein. Furthermore, the exemplary method shown in Figure 13 can be used cooperatively with other exemplary methods described herein (e.g., Figure 12) to provide various exemplary benefits and/or advantages, including those described herein. Although Figure 13 shows specific blocks in a particular order, the operations of the exemplary method can be performed in a different order than shown and can be combined and/or divided into blocks having different functionality than shown. Optional blocks or operations are indicated by dashed lines.

The exemplary method illustrated in Figure 13 can include the operations of block 1320, where the network node can transmit, to the UE, a first control message identifying which of a plurality of configured radio link control (RLC) entities are to be activated for PDCP duplication. The plurality of configured RLC entities can be associated with a radio bearer between the UE and the RAN. The exemplary method can also include the operations of block 1340, where the network node can subsequently determine that the activation status of one or more of the configured RLC entities needs to be changed. The exemplary method can also include the operations of block 1350, where the network node can subsequently transmit, to the UE, a second control message indicating activation or deactivation of the configured RLC entities. The second control message can have a different format than the first control message.

In some embodiments, the second control message does not explicitly identify particular configured RLC entities. In some embodiments, the first and second control messages can be respective medium access control (MAC) control elements (CEs), with the first control message having a 3GPP Rel-16 format and the second control message having a 3GPP Rel-15 format. For example, the Rel-15 MAC CE shown in Figure 9 does not explicitly identify configured RLC entities.

In some embodiments, the exemplary method can include the operations of block 1310, in which the network node can transmit, to the UE, a configuration associated with PDCP duplication. The configuration can include the configured RLC entities and an indication of which of the configuration RLC entities are default activated RLC entities. The configuration can be transmitted via one or more RRC messages, for example. In some embodiments, the configuration can also include a further indication of whether, upon reception of a second control message indicating activation of PDCP duplication, the UE should activate PDCP duplication for the default activated RLC entities, or for configured RLC entities that were activated before a most recent deactivation of PDCP duplication.

In some embodiments, the determining operations in block 1330 can include the operations of sub-block 1331, where the network node can determine that PDCP duplication should be activated for one of the following: configured RLC entities that were activated before the most recent deactivation of all configured RLC entities, default activated RLC entities, or all configured RLC entities. In such embodiments, the second control message can indicate activation of the configured RLC entities (e.g., without explicitly identifying particular configured RLC entities). In some of these embodiments, the second control message can implicitly indicate the following priority rule (e.g., priority order) associated with the indicated activation:
- configured RLC entities that were activated before the most recent deactivation of all configured RLC entities;
- default activated RLC entities, when no configured RLC entities were activated before the most recent deactivation and default activated RLC entities are configured for the UE; and
- all configured RLC entities, when default activated RLC entities are not configured for the UE.

In some embodiments, the determining operations in block 1330 can include the operations of sub-block 1332, where the network node can determine that PDCP duplication for the configured RLC entities should be deactivated. In such embodiments, the second control message indicates deactivation of the configured RLC entities (e.g., without explicitly identifying particular configured RLC entities). In some of these embodiments, the second control message can implicitly indicate that the UE should perform one of the following operations: clear the activation status of all configured RLC entities, or store an activation status of all configured RLC entities prior to the deactivating operation.

Although various embodiments are described herein above in terms of methods, apparatus, devices, computer-readable medium and receivers, the person of ordinary skill will readily comprehend that such methods can be embodied by various combinations of hardware and software in various systems, communication devices, computing devices, control devices, apparatuses, non-transitory computer-readable media, *etc.*

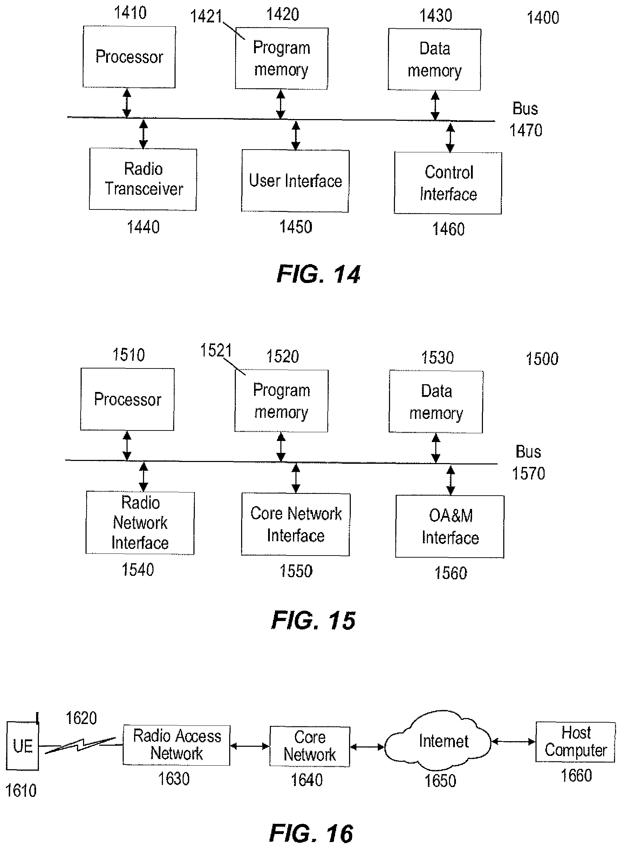

Figure 14 shows a block diagram of an exemplary wireless device or user equipment (UE) 1400 (hereinafter referred to as "UE 1400") according to various embodiments of the present disclosure, including those described above with reference to other figures. For example, UE 1400 can be configured by execution of instructions, stored on a computer-readable medium, to perform operations corresponding to one or more of the exemplary methods described herein.

UE 1400 can include a processor 1410 (also referred to as "processing circuitry") that can be operably connected to a program memory 1420 and/or a data memory 1430 via a bus 1470 that can comprise parallel address and data buses, serial ports, or other methods and/or structures known to those of ordinary skill in the art. Program memory 1420 can store software code, programs, and/or instructions (collectively shown as computer program product 1421 in Figure 14) that, when executed by processor 1410, can configure and/or facilitate UE 1400 to perform various operations, including operations corresponding to various exemplary methods described herein. As part of or in addition to such operations, execution of such instructions can configure and/or facilitate UE 1400 to communicate using one or more wired or wireless communication protocols, including one or more wireless communication protocols standardized by 3GPP, 3GPP2, or IEEE, such as those commonly known as 5G/NR, LTE, LTE-A, UMTS, HSPA, GSM, GPRS, EDGE, 1xRTT, CDMA2000, 802.11 WiFi, HDMI, USB, Firewire, *etc.*, or any other current or future protocols that can be utilized in conjunction with radio transceiver 1440, user interface 1450, and/or control interface 1460.

As another example, processor 1410 can execute program code stored in program memory 1420 that corresponds to MAC, RLC, PDCP, and RRC layer protocols standardized by 3GPP (*e.g.*, for NR and/or LTE). As a further example, processor 1410 can execute program code stored in program memory 1420 that, together with radio transceiver 1440, implements corresponding PHY layer protocols, such as Orthogonal Frequency Division Multiplexing (OFDM), Orthogonal Frequency Division Multiple Access (OFDMA), and Single-Carrier Frequency Division Multiple Access (SC-FDMA). As another example, processor 1410 can execute program code stored in program memory 1420 that, together with radio transceiver 1440, implements device-to-device (D2D) communications with other compatible devices and/or UEs.

Program memory 1420 can also include software code executed by processor 1410 to control the functions of UE 1400, including configuring and controlling various components such as radio transceiver 1440, user interface 1450, and/or control interface 1460. Program memory 1420 can also comprise one or more application programs and/or modules comprising computer-executable instructions embodying any of the exemplary methods described herein. Such software code can be specified or written using any known or future developed programming language, such as *e.g.*, Java, C++, C, Objective C, HTML, XHTML, machine code, and Assembler, as long as the desired functionality, *e.g.*, as defined by the implemented method steps, is preserved. In addition, or as an alternative, program memory 1420 can comprise an external storage arrangement (not shown) remote from UE 1400, from which the instructions can be downloaded into program memory 1420 located within or removably coupled to UE 1400, so as to enable execution of such instructions.

Data memory 1430 can include memory area for processor 1410 to store variables used in protocols, configuration, control, and other functions of UE 1400, including operations corresponding to, or comprising, any of the exemplary methods described herein. Moreover, program memory 1420 and/or data memory 1430 can include non-volatile memory (*e.g*., flash memory), volatile memory (*e.g.*, static or dynamic RAM), or a combination thereof. Furthermore, data memory 1430 can comprise a memory slot by which removable memory cards in one or more formats (*e.g.*, SD Card, Memory Stick, Compact Flash, *etc.)* can be inserted and removed.

Persons of ordinary skill will recognize that processor 1410 can include multiple individual processors (including, *e.g.*, multi-core processors), each of which implements a portion of the functionality described above. In such cases, multiple individual processors can be commonly connected to program memory 1420 and data memory 1430 or individually connected to multiple individual program memories and or data memories. More generally, persons of ordinary skill in the art will recognize that various protocols and other functions of UE 1400 can be implemented in many different computer arrangements comprising different combinations of hardware and software including, but not limited to, application processors, signal processors, general-purpose processors, multi-core processors, ASICs, fixed and/or programmable digital circuitry, analog baseband circuitry, radio-frequency circuitry, software, firmware, and middleware.

Radio transceiver 1440 can include radio-frequency transmitter and/or receiver functionality that facilitates the UE 1400 to communicate with other equipment supporting like wireless communication standards and/or protocols. In some exemplary embodiments, the radio transceiver 1440 includes one or more transmitters and one or more receivers that enable UE 1400 to communicate according to various protocols and/or methods proposed for standardization by 3GPP and/or other standards bodies. For example, such functionality can operate cooperatively with processor 1410 to implement a PHY layer based on OFDM, OFDMA, and/or SC-FDMA technologies, such as described herein with respect to other figures.

In some exemplary embodiments, radio transceiver 1440 includes one or more transmitters and one or more receivers that can facilitate the UE 1400 to communicate with various LTE, LTE-Advanced (LTE-A), and/or NR networks according to standards promulgated by 3GPP. In some exemplary embodiments of the present disclosure, the radio transceiver 1440 includes circuitry, firmware, *etc.* necessary for the UE 1400 to communicate with various NR, NR-U, LTE, LTE-A, LTE-LAA, UMTS, and/or GSM/EDGE networks, also according to 3GPP standards. In some embodiments, radio transceiver 1440 can include circuitry supporting D2D communications between UE 1400 and other compatible devices.

In some embodiments, radio transceiver 1440 includes circuitry, firmware, *etc.* necessary for the UE 1400 to communicate with various CDMA2000 networks, according to 3GPP2 standards. In some embodiments, the radio transceiver 1440 can be capable of communicating using radio technologies that operate in unlicensed frequency bands, such as IEEE 802.11 WiFi that operates using frequencies in the regions of 2.4, 5.6, and/or 60 GHz. In some embodiments, radio transceiver 1440 can include a transceiver that is capable of wired communication, such as by using IEEE 802.3 Ethernet technology. The functionality particular to each of these embodiments can be coupled with and/or controlled by other circuitry in the UE 1400, such as the processor 1410 executing program code stored in program memory 1420 in conjunction with, and/or supported by, data memory 1430.

User interface 1450 can take various forms depending on the particular embodiment of UE 1400, or can be absent from UE 1400 entirely. In some embodiments, user interface 1450 can comprise a microphone, a loudspeaker, slidable buttons, depressible buttons, a display, a touchscreen display, a mechanical or virtual keypad, a mechanical or virtual keyboard, and/or any other user-interface features commonly found on mobile phones. In other embodiments, the UE 1400 can comprise a tablet computing device including a larger touchscreen display. In such embodiments, one or more of the mechanical features of the user interface 1450 can be replaced by comparable or functionally equivalent virtual user interface features (*e.g.*, virtual keypad, virtual buttons, *etc.*) implemented using the touchscreen display, as familiar to persons of ordinary skill in the art. In other embodiments, the UE 1400 can be a digital computing device, such as a laptop computer, desktop computer, workstation, *etc.* that comprises a mechanical keyboard that can be integrated, detached, or detachable depending on the particular exemplary embodiment. Such a digital computing device can also comprise a touch screen display. Many exemplary embodiments of the UE 1400 having a touch screen display are capable of receiving user inputs, such as inputs related to exemplary methods described herein or otherwise known to persons of ordinary skill.

In some embodiments, UE 1400 can include an orientation sensor, which can be used in various ways by features and functions of UE 1400. For example, the UE 1400 can use outputs of the orientation sensor to determine when a user has changed the physical orientation of the UE 1400's touch screen display. An indication signal from the orientation sensor can be available to any application program executing on the UE 1400, such that an application program can change the orientation of a screen display (*e.g.*, from portrait to landscape) automatically when the indication signal indicates an approximate 90-degree change in physical orientation of the device. In this exemplary manner, the application program can maintain the screen display in a manner that is readable by the user, regardless of the physical orientation of the device. In addition, the output of the orientation sensor can be used in conjunction with various exemplary embodiments of the present disclosure.

A control interface 1460 of the UE 1400 can take various forms depending on the particular exemplary embodiment of UE 1400 and of the particular interface requirements of other devices that the UE 1400 is intended to communicate with and/or control. For example, the control interface 1460 can comprise an RS-232 interface, a USB interface, an HDMI interface, a Bluetooth interface, an IEEE ("Firewire") interface, an I²C interface, a PCMCIA interface, or the like. In some exemplary embodiments of the present disclosure, control interface 1460 can comprise an IEEE 802.3 Ethernet interface such as described above. In some exemplary embodiments of the present disclosure, the control interface 1460 can comprise analog interface circuitry including, for example, one or more digital-to-analog converters (DACs) and/or analog-to-digital converters (ADCs).

Persons of ordinary skill in the art can recognize the above list of features, interfaces, and radio-frequency communication standards is merely exemplary, and not limiting to the scope of the present disclosure. In other words, the UE 1400 can comprise more functionality than is shown in Figure 14 including, for example, a video and/or still-image camera, microphone, media player and/or recorder, *etc.* Moreover, radio transceiver 1440 can include circuitry necessary to communicate using additional radio-frequency communication standards including Bluetooth, GPS, and/or others. Moreover, the processor 1410 can execute software code stored in the program memory 1420 to control such additional functionality. For example, directional velocity and/or position estimates output from a GPS receiver can be available to any application program executing on the UE 1400, including any program code corresponding to and/or embodying any exemplary embodiments (*e.g.*, of methods) described herein.

Figure 15 shows a block diagram of an exemplary network node 1500 according to various embodiments of the present disclosure, including those described above with reference to other figures. For example, exemplary network node 1500 can be configured by execution of instructions, stored on a computer-readable medium, to perform operations corresponding to one or more of the exemplary methods described herein. In some exemplary embodiments, network node 1500 can comprise a base station, eNB, gNB, or one or more components thereof. For example, network node 1500 can be configured as a central unit (CU) and one or more distributed units (DUs) according to NR gNB architectures specified by 3GPP. More generally, the functionally of network node 1500 can be distributed across various physical devices and/or functional units, modules, *etc.*

Network node 1500 can include processor 1510 (also referred to as "processing circuitry") that is operably connected to program memory 1520 and data memory 1530 via bus 1570, which can include parallel address and data buses, serial ports, or other methods and/or structures known to those of ordinary skill in the art.

Program memory 1520 can store software code, programs, and/or instructions (collectively shown as computer program product 1521 in Figure 15) that, when executed by processor 1510, can configure and/or facilitate network node 1500 to perform various operations, including operations corresponding to various exemplary methods described herein. As part of and/or in addition to such operations, program memory 1520 can also include software code executed by processor 1510 that can configure and/or facilitate network node 1500 to communicate with one or more other UEs or network nodes using other protocols or protocol layers, such as one or more of the PHY, MAC, RLC, PDCP, and RRC layer protocols standardized by 3GPP for LTE, LTE-A, and/or NR, or any other higher-layer (*e.g.*, NAS) protocols utilized in conjunction with radio network interface 1540 and/or core network interface 1550. By way of example, core network interface 1550 can comprise the S1 or NG interface and radio network interface 1540 can comprise the Uu interface, as standardized by 3GPP. Program memory 1520 can also comprise software code executed by processor 1510 to control the functions of network node 1500, including configuring and controlling various components such as radio network interface 1540 and core network interface 1550.

Data memory 1530 can comprise memory area for processor 1510 to store variables used in protocols, configuration, control, and other functions of network node 1500. As such, program memory 1520 and data memory 1530 can comprise non-volatile memory (e.g., flash memory, hard disk, *etc.*), volatile memory (*e.g.*, static or dynamic RAM), network-based (*e.g.*, "cloud") storage, or a combination thereof. Persons of ordinary skill in the art will recognize that processor 1510 can include multiple individual processors (not shown), each of which implements a portion of the functionality described above. In such case, multiple individual processors may be commonly connected to program memory 1520 and data memory 1530 or individually connected to multiple individual program memories and/or data memories. More generally, persons of ordinary skill will recognize that various protocols and other functions of network node 1500 may be implemented in many different combinations of hardware and software including, but not limited to, application processors, signal processors, general-purpose processors, multi-core processors, ASICs, fixed digital circuitry, programmable digital circuitry, analog baseband circuitry, radio-frequency circuitry, software, firmware, and middleware.

Radio network interface 1540 can comprise transmitters, receivers, signal processors, ASICs, antennas, beamforming units, and other circuitry that enables network node 1500 to communicate with other equipment such as, in some embodiments, a plurality of compatible user equipment (UE). In some embodiments, interface 1540 can also enable network node 1500 to communicate with compatible satellites of a satellite communication network. In some exemplary embodiments, radio network interface 1540 can comprise various protocols or protocol layers, such as the PHY, MAC, RLC, PDCP, and/or RRC layer protocols standardized by 3GPP for LTE, LTE-A, LTE-LAA, NR, NR-U, *etc.*; improvements thereto such as described herein above; or any other higher-layer protocols utilized in conjunction with radio network interface 1540. According to further exemplary embodiments of the present disclosure, the radio network interface 1540 can comprise a PHY layer based on OFDM, OFDMA, and/or SC-FDMA technologies. In some embodiments, the functionality of such a PHY layer can be provided cooperatively by radio network interface 1540 and processor 1510 (including program code in memory 1520).

Core network interface 1550 can comprise transmitters, receivers, and other circuitry that enables network node 1500 to communicate with other equipment in a core network such as, in some embodiments, circuit-switched (CS) and/or packet-switched Core (PS) networks. In some embodiments, core network interface 1550 can comprise the S1 interface standardized by 3GPP. In some embodiments, core network interface 1550 can comprise the NG interface standardized by 3GPP. In some exemplary embodiments, core network interface 1550 can comprise one or more interfaces to one or more AMFs, SMFs, SGWs, MMEs, SGSNs, GGSNs, and other physical devices that comprise functionality found in GERAN, UTRAN, EPC, 5GC, and CDMA2000 core networks that are known to persons of ordinary skill in the art. In some embodiments, these one or more interfaces may be multiplexed together on a single physical interface. In some embodiments, lower layers of core network interface 1550 can comprise one or more of asynchronous transfer mode (ATM), Internet Protocol (IP)-over-Ethernet, SDH over optical fiber, T1/E1/PDH over a copper wire, microwave radio, or other wired or wireless transmission technologies known to those of ordinary skill in the art.

In some embodiments, network node 1500 can include hardware and/or software that configures and/or facilitates network node 1500 to communicate with other network nodes in a RAN, such as with other eNBs, gNBs, ng-eNBs, en-gNBs, IAB nodes, *etc.* Such hardware and/or software can be part of radio network interface 1540 and/or core network interface 1550, or it can be a separate functional unit (not shown). For example, such hardware and/or software can configure and/or facilitate network node 1500 to communicate with other RAN nodes via the X2 or Xn interfaces, as standardized by 3GPP.

OA&M interface 1560 can comprise transmitters, receivers, and other circuitry that enables network node 1500 to communicate with external networks, computers, databases, and the like for purposes of operations, administration, and maintenance of network node 1500 or other network equipment operably connected thereto. Lower layers of OA&M interface 1560 can comprise one or more of asynchronous transfer mode (ATM), Internet Protocol (IP)-over-Ethernet, SDH over optical fiber, T1/E1/PDH over a copper wire, microwave radio, or other wired or wireless transmission technologies known to those of ordinary skill in the art. Moreover, in some embodiments, one or more of radio network interface 1540, core network interface 1550, and OA&M interface 1560 may be multiplexed together on a single physical interface, such as the examples listed above.

Figure 16 is a block diagram of an exemplary communication network configured to provide over-the-top (OTT) data services between a host computer and a user equipment (UE), according to one or more exemplary embodiments of the present disclosure. UE 1610 can communicate with radio access network (RAN) 1630 over radio interface 1620, which can be based on protocols described above including, *e.g.*, LTE, LTE-A, and 5G/NR For example, UE 1610 can be configured and/or arranged as shown in other figures discussed above.

RAN 1630 can include one or more terrestrial network nodes (*e.g.*, base stations, eNBs, gNBs, controllers, *etc.*) operable in licensed spectrum bands, as well one or more network nodes operable in unlicensed spectrum (using, *e.g.*, LAA or NR-U technology), such as a 2.4-GHz band and/or a 5-GHz band. In such cases, the network nodes comprising RAN 1630 can cooperatively operate using licensed and unlicensed spectrum. In some embodiments, RAN 1630 can include, or be capable of communication with, one or more satellites comprising a satellite access network.

RAN 1630 can further communicate with core network 1640 according to various protocols and interfaces described above. For example, one or more apparatus (*e.g.*, base stations, eNBs, gNBs, *etc.*) comprising RAN 1630 can communicate to core network 1640 via core network interface 1650 described above. In some exemplary embodiments, RAN 1630 and core network 1640 can be configured and/or arranged as shown in other figures discussed above. For example, eNBs comprising an E-UTRAN 1630 can communicate with an EPC core network 1640 via an S1 interface. As another example, gNBs and ng-eNBs comprising an NG-RAN 1630 can communicate with a 5GC core network 1630 via an NG interface.

Core network 1640 can further communicate with an external packet data network, illustrated in Figure 16 as Internet 1650, according to various protocols and interfaces known to persons of ordinary skill in the art. Many other devices and/or networks can also connect to and communicate via Internet 1650, such as exemplary host computer 1660. In some exemplary embodiments, host computer 1660 can communicate with UE 1610 using Internet 1650, core network 1640, and RAN 1630 as intermediaries. Host computer 1660 can be a server (*e.g.*, an application server) under ownership and/or control of a service provider. Host computer 1660 can be operated by the OTT service provider or by another entity on the service provider's behalf.

For example, host computer 1660 can provide an over-the-top (OTT) packet data service to UE 1610 using facilities of core network 1640 and RAN 1630, which can be unaware of the routing of an outgoing/incoming communication to/from host computer 1660. Similarly, host computer 1660 can be unaware of routing of a transmission from the host computer to the UE, *e.g.*, the routing of the transmission through RAN 1630. Various OTT services can be provided using the exemplary configuration shown in Figure 16 including, *e.g.*, streaming (unidirectional) audio and/or video from host computer to UE, interactive (bidirectional) audio and/or video between host computer and UE, interactive messaging or social communication, interactive virtual or augmented reality, *etc.*

The exemplary network shown in Figure 16 can also include measurement procedures and/or sensors that monitor network performance metrics including data rate, latency and other factors that are improved by exemplary embodiments disclosed herein. The exemplary network can also include functionality for reconfiguring the link between the endpoints (*e.g.*, host computer and UE) in response to variations in the measurement results. Such procedures and functionalities are known and practiced; if the network hides or abstracts the radio interface from the OTT service provider, measurements can be facilitated by proprietary signaling between the UE and the host computer.

Exemplary embodiments that activate or deactivate packet data convergence protocol (PDCP) duplication in a plurality of radio link control (RLC) entities associated with a radio bearer between the UE and a radio access network (RAN), as described herein, can play a critical role by enabling UE 1610 and RAN 1630 to meet the requirements of the particular OTT service between host computer 1660 and UE 1610. Various benefits can result from activation/deactivation of RLC entities for PDCP duplication according to these embodiments. For example, utilizing the smaller, less complex Rel-15 MAC CE to control Rel-16 PDCP duplication activation/deactivation features when the network does not need to individually control the activated and deactivated RLC entities requires less bandwidth to send to UEs, and can simplify UE processing. As such, the combination of Rel-15 and Rel-15 MAC CEs facilitates the use of PDCP duplication in more UEs operating in a given network coverage area (e.g., in dual-connectivity and/or carrier aggregation). By improving UE and network performance in these and other ways, exemplary embodiments improve reliability and/or latency of data transmissions in a network coverage area. This can facilitate greater use of data-intensive, high-reliability, and/or low-latency OTT services in various coverage conditions without excessive power consumption or other degradations to user experience.

The foregoing merely illustrates the principles of the disclosure. Various modifications and alterations to the described embodiments will be apparent to those skilled in the art in view of the teachings herein. It will thus be appreciated that those skilled in the art will be able to devise numerous systems, arrangements, and procedures that, although not explicitly shown or described herein, embody the principles of the disclosure and can be thus within the spirit and scope of the disclosure. Various exemplary embodiments can be used together with one another, as well as interchangeably therewith, as should be understood by those having ordinary skill in the art.

The term unit, as used herein, can have conventional meaning in the field of electronics, electrical devices and/or electronic devices and can include, for example, electrical and/or electronic circuitry, devices, modules, processors, memories, logic solid state and/or discrete devices, computer programs or instructions for carrying out respective tasks, procedures, computations, outputs, displaying functions, etc., such as those that are described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, *etc.* Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification, drawings and exemplary embodiments thereof, can be used synonymously in certain instances, including, but not limited to, *e.g.*, data and information. It should be understood that, while these words and/or other words that can be synonymous to one another, can be used synonymously herein, that there can be instances when such words can be intended to not be used synonymously. Further, to the extent that the prior art knowledge has not been explicitly incorporated by reference herein above, it is explicitly incorporated herein in its entirety. All publications referenced are incorporated herein by reference in their entireties.

Embodiments of the present disclosure include, but are not limited to, the following enumerated examples.
E1. A method, performed by a user equipment (UE), for activating or deactivating packet data convergence protocol (PDCP) duplication in a plurality of radio link control (RLC) entities associated with a radio bearer between the UE and a radio access network (RAN), the method comprising:
   receiving a first medium access control (MAC) control element (CE) identifying which of a plurality of configured RLC entities are to be activated for PDCP duplication;
   subsequently receiving a second MAC CE indicating activation or deactivation of the configured RLC entities associated with the radio bearer, wherein the second MAC CE has a different format than the first MAC CE; and
   activating or deactivating each of the configured RLC entities based on the first MAC CE and the second MAC CE.
E2. The method of embodiment E1, further comprising, if the number of RLC entities identified to be activated by the first MAC CE is greater than a predetermined threshold, activating the identified RLC entities for PDCP duplication prior to receiving the second MAC CE.
E3. The method of embodiment E2, wherein the predetermined threshold is one.
E4. The method of any of embodiments E1-E3, further comprising:
   receiving, from the RAN, a radio resource control (RRC) configuration associated with PDCP duplication, wherein the RRC configuration includes the configured RLC entities and default activated RLC entities; and
   storing the received RRC configuration.
E5. The method of embodiment E4, further comprising, if the number of RLC entities identified to be activated by the first MAC CE is less than the predetermined threshold, performing the following operations prior to receiving the second MAC CE:
   clearing a stored activation status of all of the configured RLC entities; and
   deactivating all of the configured RLC entities.
E6. The method of any of embodiments E4-E5, further comprising, if the number of RLC entities identified to be activated by the first MAC CE is equal to the predetermined threshold, activating the default activated RLC entities.
E7. The method of any of embodiments E4-E5, further comprising, if the number of RLC entities identified to be activated is equal to the predetermined threshold, performing the following operations prior to receiving the second MAC CE:
   deactivating all of the configured RLC entities; and
   storing an activation status of all of the configured RLC entities prior to the deactivating operation.
E8. The method of any of embodiments E1-E7, wherein activating or deactivating comprises, if the second MAC CE indicates activation of the configured RLC entities:
   reading a stored activation status of all of the configured RLC entities; and
   if the stored activation status is not cleared, activating the configured RLC entities according to the stored activation status.
E9. The method of embodiment E8, wherein activating or deactivating further comprises, if the second MAC CE indicates activation of the configured RLC entities and the stored activation status is cleared:
   checking for stored default activated RLC entities; and
   if the stored default activated RLC entities exist, activating the configured RLC entities according to the stored default activated RLC entities.
E10. The method of embodiment E9, wherein activating or deactivating further comprises, if the stored default activated RLC entities do not exist, activating all configured RLC entities.
E11. The method of any of embodiments E1-E10, wherein activating or deactivating further comprises, if the second MAC CE indicates deactivation of the configured RLC entities:
   deactivating all of the configured RLC entities for PDCP duplication; and
   performing one of the following operations:
      clearing the activation status of all of the configured RLC entities, or
      storing an activation status of all of the configured RLC entities prior to the deactivating operation.
E12. The method of any of embodiments E1-E11, wherein the second MAC CE does not explicitly identify particular configured RLC entities.
E13. The method of any of embodiments E1-E12, wherein the first MAC CE has a 3GPP Rel-16 format, and the second MAC CE has a 3GPP Rel-15 format.
E14. A method, performed by a network node in a radio access network (RAN), for activating or deactivating packet data convergence protocol (PDCP) duplication in a plurality of radio link control (RLC) entities associated with a radio bearer between a user equipment (UE) and the RAN, the method comprising:
   determining which of a plurality of RLC entities configured for the UE need to be activated for PDCP duplication;
   transmitting, to the UE, a first medium access control (MAC) control element (CE) identifying the configured RLC entities determined to be activated;
   subsequently determining that the activation status of one or more of the configured RLC entities needs to be changed; and
   subsequently transmitting, to the UE, a second MAC CE indicating activation or deactivation of the configured RLC entities, wherein the second MAC CE has a different format than the first MAC CE.
E15. The method of embodiment E14, further comprising transmitting, to the UE, a radio resource control (RRC) configuration associated with PDCP duplication, wherein the RRC configuration includes:
   the configured RLC entities; and
   default activated RLC entities.
E16. The method of any of embodiments E14-E15, wherein the second MAC CE does not explicitly identify particular configured RLC entities.
E17. The method of any of embodiments E13-E16, wherein the first MAC CE has a 3GPP Rel-16 format, and the second MAC CE has a 3GPP Rel-15 format.
E18. A user equipment (UE) configured to activate or deactivate packet data convergence protocol (PDCP) duplication in a plurality of radio link control (RLC) entities associated with a radio bearer between the UE and a radio access network (RAN), the UE comprising:
   communication circuitry configured to communicate with a network node serving a cell in a wireless communication network; and
   processing circuitry operatively associated with the communication circuitry and configured to perform operations corresponding to the methods of any of exemplary embodiments E1-E13.
E19. A user equipment (UE) configured to activate or deactivate packet data convergence protocol (PDCP) duplication in a plurality of radio link control (RLC) entities associated with a radio bearer between the UE and a radio access network (RAN), the UE being arranged to perform operations corresponding to the methods of any of exemplary embodiments E1-E13.
E20. A non-transitory, computer-readable medium storing computer-executable instructions that, when executed by at least one processor of a user equipment (UE), configure the UE to perform operations corresponding to the methods of any of exemplary embodiments E1-E13.
E21. A network node, in a radio access network (RAN), configured to activate or deactivate packet data convergence protocol (PDCP) duplication in a plurality of radio link control (RLC) entities associated with a radio bearer between a user equipment (UE) and the RAN, the network node comprising:
   network interface circuitry configured to communicate with the UE; and
   processing circuitry operatively associated with the network interface circuitry and configured to perform operations corresponding to the methods of any of embodiments E14-E17.
E22. A network node, in a radio access network (RAN), configured to activate or deactivate packet data convergence protocol (PDCP) duplication in a plurality of radio link control (RLC) entities associated with a radio bearer between a user equipment (UE) and the RAN, the network node being arranged to perform operations corresponding to the methods of any of embodiments E14-E17.
E23. A non-transitory, computer-readable medium storing computer-executable instructions that, when executed by at least one processor comprising a network node in a radio access network (RAN), configure the network node to perform operations corresponding to the methods of any of exemplary embodiments E14-E17.

## Claims

1. A method performed by a user equipment, UE, the method comprising:
receiving (1230), from a network node in a radio access network, RAN, a first control message identifying which of a plurality of configured radio link control, RLC, entities are to be activated for PDCP duplication, wherein the plurality of configured RLC entities are associated with a radio bearer between the UE and the RAN;
subsequently receiving (1270), from the network node, a second control message indicating activation or deactivation of PDCP duplication for the configured RLC entities, wherein the second control message has a different format than the first control message, wherein the first and second control messages are respective medium access control, MAC, control elements, CEs, wherein the first control message has a first format, and the second control message has a second format; and
activating or deactivating (1280) PDCP duplication for the configured RLC entities based on the first control message and the second control message.

2. The method of claim 1, further comprising, when the number of configured RLC entities identified to be activated by the first control message is greater than a predetermined threshold, activating (1240) PDCP duplication for the identified RLC entities before receiving the second control message.

3. The method of claim 2, wherein the predetermined threshold is one.

4. The method of any of claims 2-3, further comprising, when the number of configured RLC entities identified to be activated by the first control message is less than the predetermined threshold, performing (1250) the following operations before receiving the second control message:
clearing stored activation status of the configured RLC entities; and
deactivating PDCP duplication for all configured RLC entities.

5. The method of any of claims 2-4, further comprising, when the number of configured RLC entities to be activated by the first control message is equal to the predetermined threshold, performing (1260) one or more operations before receiving the second control message, wherein the one or more operations include activating (1261) PDCP duplication only for default activated RLC entities.

6. The method of any of claims 2-4, further comprising, when the number of RLC entities identified to be activated by the first control message is equal to the predetermined threshold, performing (1260) the following operations before receiving the second control message:
storing (1262) activation status of the configured RLC entities; and
subsequently deactivating (1263) PDCP duplication for all configured RLC entities

7. The method of any of claims 1-6, wherein activating or deactivating (1280) comprises:
when the second control message indicates activation of the configured RLC entities, reading (1281) a stored activation status of the configured RLC entities; and
when the stored activation status indicates at least one configured RLC entity activated, activating or deactivating (1282) PDCP duplication for the configured RLC entities according to the stored activation status.

8. The method of claim 7, wherein activating or deactivating (1280) further comprises:
when the second control message indicates activation of the configured RLC entities and the stored activation status indicates all configured RLC entities deactivated,
checking (1283) for stored default activated RLC entities; and when the stored default activated RLC entities exist, activating (1284) PDCP duplication only for the stored default activated RLC entities.

9. The method of claim 8, wherein activating or deactivating (1280) further comprises, when the stored default activated RLC entities do not exist, activating (1285) PDCP duplication for all configured RLC entities.

10. The method of any of claims 1-9, further comprising:
receiving (1210), from the RAN, a configuration associated with PDCP duplication, wherein the configuration includes the configured RLC entities and an indication of which of the configured RLC entities are default activated RLC entities; and
storing (1220) the received configuration.

11. The method of claim 10, wherein:
the configuration also includes a further indication of whether, upon reception of a second control message indicating activation of PDCP duplication, the UE should activate PDCP duplication for:
the default activated RLC entities, or
configured RLC entities that were activated before a most recent deactivation of PDCP duplication; and
activating or deactivating (1280) PDCP duplication for the configured RLC entities is further based on the further indication.

12. The method of any of claims 1-11, wherein activating or deactivating (1280) comprises, when the second control message indicates deactivation of the configured RLC entities:
deactivating (1286) PDCP duplication for all configured RLC entities; and
performing one of the following operations:
clearing (1287) the activation status of all configured RLC entities, or
storing (1288) an activation status of all configured RLC entities prior to the deactivating operation.

13. The method of any of claims 1-12, wherein the second control message does not explicitly identify particular configured RLC entities.

14. A user equipment, UE (100, 1400, 1610) arranged to perform operations corresponding to any of the methods of claims 1-13.

15. A computer program product (1421) comprising computer-executable instructions that, when executed by processing circuitry (1410) of a user equipment, UE (100, 1400, 1610), configure the UE to perform operations corresponding to any of the methods of claims 1-13.
